# EUROPEAN PATENT SPECIFICATION

(11) **EP 3 309 411 B1**
(45) Date of publication and mention of the grant of the patent: **10.03.2021**
(21) Application number: 17195954.7
(22) Date of filing: 11.10.2017
(51) Int. Cl.: E04F 15/00

(54) **LOCKING ELEMENT**
VERRIEGELUNGSELEMENT
ÉLÉMENT DE VERROUILLAGE

(30) Priority: 14.10.2016 DK 201670808; 30.01.2017 DK 201770056
(43) Date of publication of application: 18.04.2018
(73) Proprietor: Excellent Holding ApS, 8544 Morke (DK)
(72) Inventor: FREDERIKSEN, Ole, 8543 Hornslet (DK)
(74) Representative: Tellefsen, Jens J.

(56) References cited:
- FR-A1- 3 049 301
- US-A- 5 727 355
- US-A1- 2009 165 414

## Description

### Field of the Invention

The present invention relates to a locking element for engaging and connecting at least two overlapping tiles and a construction assembled by means of such a locking element and comprising at least two layers of tiles and a method of assembling and disassembling such a construction.

### Background of the Invention

The tiles which are suitable for use with the present invention may be characterized in that they have a surface with at least one aperture and where the surface has a material thickness and that along the periphery of the surface a flange is provided which flange in use is oriented downwards relative to the surface.

In the prior art a number of systems are known. For example CH 540398, EP 0982448 and US 20020189176 concern modular tiles of this type, however, these tiles are assembled by means in the flanges and do not have apertures in the surface.

Similar types of tiles provided with apertures in the surface are known from for example US 5509244 and EP 1192322.

Particularly, the tile system disclosed in EP 1192322 is illustrated as a system where it is possible to create a multilayer construction comprising a plurality of tile layers. By superposing apertures in each layer it is possible to insert a locking element through the overlapping apertures, such that adjacent layers are interconnected. However, there are a number of drawbacks in this construction. Firstly, the locking elements are only able to lock the upper tile with the tile immediately below in that the locking elements have a predetermined length. This is due to the fact that the locking elements are snapping into locking engagement such that the distance between the underside of the head portion and the snap locking part must be very precise in order to avoid that tolerances occur which can make the assembly unsteady.

Furthermore, as the locking element is a snap coupling, it is impossible to remove the locking element without destroying the locking element. Normally, removal or disassembly of a ramp using these locking elements is carried out by drilling away the locking element or at least the head portion of the locking element such that the body of the locking element and the snap coupling feature is separated from the head portion whereby it is possible to disassemble the two tile elements. For ramp constructions where a plurality of layers are assembled this causes a relatively large waste in that when disassembling such a construction and removing the head portions of all the locking elements a large number of loose components are created which need to be assembled in order not to leave any waste behind after having removed the ramp. Also the destroyed locking elements will have to be disposed of, and cannot be reused.

A further aspect is the fact that in tile systems of this type the flanges may have varying heights for different purposes. This requires that the snap fitting systems are provided in different lengths, and again this may create the possibility of using the wrong locking elements with the wrong type of tiles.

Also, in this connection it is important to notice that when building ramps or elevated constructions using tile elements of this type the connection between adjacent layers shall be very firm such that a user of such a construction does not feel that the ramp or elevated surface is shaky or unstable. For these purposes it is necessary to have a firm engagement between adjacent layers and as such the locking elements must tightly lock adjacent tiles together. With the prior art locking elements as disclosed in EP1192322 there is no possibility of adjusting the tightness with which adjacent tiles are connected.

Furthermore the prior art a number of other types of systems are known. For example US5727355, FR3049301 and US2009/165414.

A stone facing section anchor mounting system in described in US5727355 has a special hole configuration, in facing stone, that will not rotate while being installed, and because of its installed angularity and pressure points will not tend to rupture or pull out of the stone. The anchor system holds beyond the lateral strength of the stone itself when the stone is at the cracking point. The superior holding power of the present anchor and its minimum edge distance eliminates the kerf and aluminum "J" structure and silicone used with other anchors, and while having the advantage of being hidden it also has the holding power of a through bolt. Fan nut anchor holes in facing material are made with ease to tolerances required. The anchors do not rotate during installation and use a lock nut that does not work loose in transit and the anchor is such, with accurate whole predetermined angularity that installation can be made without over tightening occurring.

It is only possibility of adjusting the tightness of the grip by using pluralities of items together. The teaching in US5727355 provides bolts, nuts and clamping means to keep the anchor in a tensed connection, and requires a large set of powerful tools for assembling and disassembling the anchor system safely.

This system of clamps described in FR3049301, is intended to ensure the fixing of an anchoring lug on a frame of a joinery. The system of clamps comprises a clamp comprising a core configured to slide in an opening of a branch of the anchoring tab in a longitudinal direction of the branch, while being locked in rotation relative thereto. At least one blocking element bonded to a first side of the core and positioned relative to the core in an extension direction which, when the core is received in the opening, is substantially parallel to the longitudinal direction of the leg. Clamping means located on a second side of the core and allowing, when the core is received in the opening. To adjust the spacing between the locking element and the leg, the clamp being able to be pre-fixed on the anchoring tab in a position mounting where said spacing is adapted so that a lip of a clipping groove of the frame is adapted to be received between the locking element and the branch.

Similar the teaching from US5727355, the teaching in FR3049301 only provides the possibility of adjusting the tightness of the grip by using pluralities of items together. The teaching in FR3049301 provides bolts/clamps, nuts and assembling means to keep the anchoring tab and frame connected, and also this requires a large set of tools for assembling the system.

A spring-biased floor for gymnastic and cheerleading competitions described in US2009/165414, is formed from a plurality of interlocked panels having overlapping edges. Springs are mounted on the bottom of the panels, including beneath the overlapped edges. The primary panels include L-shaped ledges extending along two adjacent sides, while finishing panels include a ledge along only one side. The springs mount onto heads extending downwardly from the panels and having a 360 DEG lip over which the springs are snap fit. The interlocked panels are assembled with locking elements. In this construction of interlocked panels, there are only two layers assembled using the locking element.

The spring-biased floor requires a relatively uniform assembly construction to have a firm engagement between adjacent layers using the locking element. Such interlocked panels must also provide a tightly lock adjacent floor elements together, but the teaching in US2009/165414 there is no possibility of adjusting the tightness with which adjacent interlocked panels are connected. Furthermore the locking elements are only provided with a weak locking mechanism which locks onto the underlying locking element. The risk of the locking to loosen during use is potential.

Usually, when the materials from which the tiles and locking elements are manufactured, i.e. polymers or modified polymers, are exposed to thermal expansion or contraction, the distance between the head portion and the snap locking portion is not always constant. This may cause difficulties when assembling layers of tiles in that the locking element is too short such that extreme force is necessary in order to force the locking element through the underlying tile's aperture or in warmer climates the locking element may have extended such that a relatively loose connection is created.

### Object of the Invention

Consequently, it is an object of the present invention to address disadvantages and at the same time achieve further advantages.

### Description of the Invention

The invention addresses this by providing a locking element and at least two overlapping tiles, where said locking element engages and connects said at least two overlapping tiles,, where the tiles are of the type having a surface with at least one aperture, and where the tiles are defined by a surface having a material thickness, where said surface along its periphery is provided with a flange, said flange defining a tile height, which flange in use is oriented downwards relative to the surface where the at least one aperture provided in the surface of each tile may be superposed an aperture in an underlying tile, where there is a distance between the two surfaces substantially corresponding to the height of the flange where said locking element has a head portion attached or integral with a body portion, where said body portion extends along a longitudinal axis, and where said head portion has an upper part and a lower part, where said upper part has a larger cross-section perpendicular to the longitudinal axis than the lower part, and where both the upper part and the lower part is limited by three or more sides, where said lower part, has a shape complimentary to said aperture.

By providing the head portion of the locking element in a cross section perpendicular to the axis of symmetry has a multisided geometry. The advantages of providing a multisided geometry is the fact that for a number of tiles the surface of the tile may be provided with a pattern. By designing the pattern adjacent the apertures in the surface of the tiles with a view to the locking elements being used it is possible to use the surface design in order to lock and avoid the head portions to rotate simply by providing for example a ridge round the aperture or around a part of the aperture at a distance such that the head portion may fit inside said ridge, but in such close proximity to the outline of the head portion that it will be difficult to rotate the head portion in that it will be in engagement with the ridge provided on the surface.

In an aspect of the invention each side of the body cross-section is non-parallel to any side of said first head cross-section.

It is possible to insert the locking member into the set of overlapping apertures; hence it is not possible to see whether or not the locking members are properly engaged with the edge of an aperture in an underlying tile.

Usually the user first inserts the locking members into any number of sets of overlapping apertures and afterwards the user rotates the locking element, thereby engaging the locking element with the set of overlapping tiles. If the heads are not twisted relative to said body, then the user would not be able to see which locking members are rotary engaged with the overlapping tiles and which are not rotary engaged with the overlapping tiles.

In a further advantageous embodiment of the invention said body portion is symmetrical around the longitudinal axis being an axis of symmetry, said axis of symmetry being coaxial with the longitudinal axis of said body portion, and where on at least a length x parallel to the axis of symmetry, the body portion is provided with a circumferential thread.

By providing a locking element with a thread it is possible to adjust the tension with which the adjacent layers of tiles is assembled and at the same time to use the same locking element for various types of tiles, i.e. tiles having different flange lengths. The adjustments are step less, due to the continuous thread.

At the same time, by simply unscrewing the locking elements from their engagement with the underlying tiles, it is possible to collect and reuse the locking elements thereby leaving no waste behind.

In a further advantageous embodiment of the invention where the body is provided with a thread, the geometry of the locking element is designed such that in a cross section perpendicular to the axis of symmetry the head portion is larger than the body portion but, smaller or equal to the outermost periphery of the thread.

As it is foreseen that in use the locking element will be screwed into the apertures the aperture need only have a dimension allowing the body portion of the locking element to pass whereas the thread portion may be wider or indeed shall be wider than the aperture. For the same reasons and in order not to have the head portion pass the aperture and not take up too much space on the surface of the tile, the head portion's dimensions in a cross section perpendicular to the longitudinal axis of the locking element may be similar to that of the thread.

In order to be able to manipulate the locking element the locking element in a further advantageous embodiment of the invention has a head which is provided with engagement aperture, said aperture being formed from a top surface in the head a distance along the axis of symmetry. In this manner it is possible to insert a suitable tool corresponding to the aperture provided in the head portion of the locking element such that the locking element can easily be manipulated relative to the tiles. In practice, a good result has been achieved with a hexagonally shaped aperture which fits with an Umbraco key. By mounting a bit in a cordless drill it is very easy and fast to assemble and disassemble tile elements.

In a still further advantageous embodiment of the invention a section of the body portion adjacent the head portion is bendable. This is particularly interesting where the construction which it is desirable to assemble is a ramp such that the lowermost tile is substantially level whereas the upper tile layer is arranged with an incline. In order to achieve this, a wedge element may be inserted between two of the layers in the construction. By providing the uppermost section of the body as bendable it is possible to compensate for the variation in inclination of the aperture in the tiles in that the apertures in the lowermost tile element which is level will have an axis which is substantially vertical whereas the corresponding axis in the uppermost tile element will be inclined at a different angle.

By providing a bendable section it is possible to arrange the head portions of the locking elements substantially flush with the surface and at the same time provide a reliable engagement with the lowermost tile although the inclination angles are different.

In a further advantageous embodiment the body has at least one recess group, where each recess group has one or more recesses in a recess plane substantially perpendicular to the longitudinal axis.

The locking element has group of recesses instead of a group of protrusions extending from the body of the locking element as known from prior art document US2004005430. This feature changes how the locking element works and how the interlocking tile system works.

By having one or more recesses the locking element is adapted to the aperture, while the apertures are adapted to the locking element in prior art document US2004005430. The benefit being that the invention may be used for different tiles having different apertures. The skilled person just has to design a locking element based on the shape of the aperture using the teachings of this invention. The invention will reduce the wobbling of overlapping tiles, which will lead to an increased stability.

It is known in the art that if the locking element has a wedge, then the locking element can be forced through a set of overlapping apertures. It will however not be possible to remove the locking element without destroying the locking element or the tile. The locking element can be destroyed by drilling the structure of the locking element, however this is time consuming and it will generate small pieces of garbage. The small pieces of garbage may further be trapped in the structure of the overlapping tiles, where it can accumulate over time.

In an embodiment the locking element may have several groups of recesses in order for the same locking element to be able to engage with several different designs of tiles. This may be done by adding a group of recesses at different body cross-sections. Furthermore, the shape and the number of recesses of each group of recesses may also differ depending on the apertures of the tile.

In an advantageous embodiment the recesses have bevelled surface. This will create an initial tension between the recess and the edge of the aperture. The forces may be large enough to break the tile if the tile is not made of a ductile material, so that it may release the stress.

In an embodiment the body has a body cross-section, which corresponds substantially to the shape of the set of apertures of the overlapping tiles. The benefit being that the overlapping tiles are already locked in place just by inserting the locking element into the set of overlapping apertures. The overlapping tiles can no longer move relative to the body, hence the person assembling the tiles have just secured that the other apertures are aligned; whereby sets of overlapping apertures are formed. This effect will further increase, if another locking element is inserted into another set of overlapping apertures in the same set of tiles placed far from the first set of overlapping apertures. It is important to notice that the insertion may be done without the use of tools. Furthermore, the locking element may still be removed by means of a hand tool.

In an embodiment the head angle is 90 degrees, which is the case when working with tiles having a planar structure i.e. a surface substantially perpendicular to the axis of the overlapping apertures.

In another embodiment the head angle is smaller than 90 degrees, which is the case when working with sloped tiles for a ramp or the like. The interlocking member will be able to interact properly by having a head angle so that the head may follow the slope of the tiles.

In an aspect of the invention the recess plane and the horizontal axis may intersect at a recess angle.

The benefit of having a recess angle between the recess plane and the horizontal axis is that the interaction between the edge of the aperture and the group of recess is increased, when the locking element rotates such that the recess engages with edge of the aperture.

The recess angle can be chosen between 65 and 88 degrees.
The recess angle can in particular be chosen between 82 and 88 degrees.

In an aspect of the invention the recess group may comprise a single recess along the entire periphery of the body.

The single recess along the periphery of the body is particularly used, when the body cross-section has exactly the same shape and area as the aperture. Otherwise it would not be possible for the locking element to rotate without damaging the edge of the aperture and/or the locking element.

In an aspect of the invention the head has a second head cross-section between the body and the first head cross-section. Said second head cross-section is parallel to the first head cross-section and complementary to the shape of the aperture.

The benefit of having a second head cross-section complementary to the shape of the aperture is that it will further increase the interaction between the locking element and the tile.

In an advantageous embodiment the recesses have a bevelled surface. This will create an initial tension between the recess and the edge of the aperture, when the locking member rotates such that it engages with the edge of the aperture. The initial tension forces the locking member towards the overlapping tiles and vice versa. This initial tension may be released or partially released when the second head cross-section is forced into the aperture. This will lock the interlocking tile system even further as the reverse would have to happen for interlocking tile system to unlock.

In an aspect of the invention said body cross-section and said first head cross-section both have the shape of a rectangle. It should be noted that a rectangle is also a square. The benefit of having a rectangular shape is that it is sturdy and simple, which makes the production faster and cheaper.

However, the invention is not limited to a rectangular shape. The locking element could have body cross-sections and a first head cross-section, which are triangular shaped, oval shaped, pentagon shaped or a higher order of a polygon shape.

The body cross-section must not have the shape of a circle, but the first head cross-section can have the shape of a circle.

The body cross-section and the first head cross-section may have different shapes independently of each other.

In an embodiment the first head cross-section may be a rectangle having two sides longer than the other two; thus providing the user with a longer lever arm when turning the locking element.

The invention is also directed at a construction comprising at least two layers of tiles, where the advantages of using a locking element according to the invention will be the same and the drawbacks of the prior art as discussed above will be avoided.

The invention is also directed at a method of assembling and disassembling at least two overlapping tiles and a locking element according to independent claim 12.

According to an example an interlocking tile system comprises a set of overlapping apertures formed by at least two overlapping tiles each tile having one or more apertures.

The interlocking tile system has at least one locking element.

A locking element has a head attached to or integrated with a body. A longitudinal axis is arranged parallel to the body.

Said locking element has a substantial T-shaped cross-section in a first plane parallel to said longitudinal axis.

Said head has a first head cross-section in a head plane intersecting the longitudinal axis at a head angle, where said first head cross-section is larger than the aperture.

Said body has a body cross-section in a second plane perpendicular to the longitudinal axis. Said body cross-section is smaller than the head cross-section and complementary to the shape of the aperture.

There is at least one second plane perpendicular to said longitudinal axis and to said body. The second plane defines at least one body cross-section. Said at least one body cross-section is complementary to the shape of the apertures.

The body has at least one recess group, where each recess group has one or more recesses in a recess plane substantially perpendicular to the longitudinal axis.

Said locking element is inserted with its body first into the set of overlapping apertures and said locking element engages pivotally with at least two overlapping tiles by turning the locking element 35-55 degrees, thereby at least one group of recesses engages with at least one tile.

In an aspect of the invention the tile may be made of a ductile material. The ductile material could be an injection mould polymer such as urea, PUR, POM or PP.

The benefit of using an injection mould polymer is that injection moulding is a cheap and fast manufacturing method.

The tiles should be made of a ductile material, because if the tile is not made of a ductile material, then it may break due to the forces between the tile and the locking member.

In an aspect of the invention the tile may have a lip surrounding the aperture, said lip being complimentary to the first head cross-section.

The lip surrounding the aperture will further lock the interlocking member as the head of the interlocking element may interact with the lip while protecting said head from sideway forces.

Furthermore, it is made even easier to see which locking members that are rotary engaged with overlapping tiles and which locking members are not rotary engaged with overlapping tiles.

### Description of the Drawing

The invention will now be explained with reference to the accompanying drawings wherein
- Fig. 1: illustrates part of a ramp assembled from a number of tile layers as well as a wedge element
- Fig. 2a-d: illustrate various views of one embodiment of a locking element
- Fig. 3: illustrates an embodiment of the locking element;
- Fig. 4: illustrates a second embodiment of the locking element;
- Fig. 5: illustrates a third embodiment of the locking element;
- Fig. 6: illustrates a fourth embodiment of the locking element;
- Fig. 7: illustrates a view of an embodiment of the interlocking tile system;
- Fig. 8: illustrates two close-ups of the interaction between the head and an aperture;
- Fig. 9: illustrates a fifth embodiment of the locking element;
- Fig. 10: illustrates the relative placement of the cross-sections; and
- Fig. 11: illustrates the working principle of the lip and first head cross-sections.
- Fig. 12: illustrates a cross-section through an aperture.

### Detailed Description of the Invention

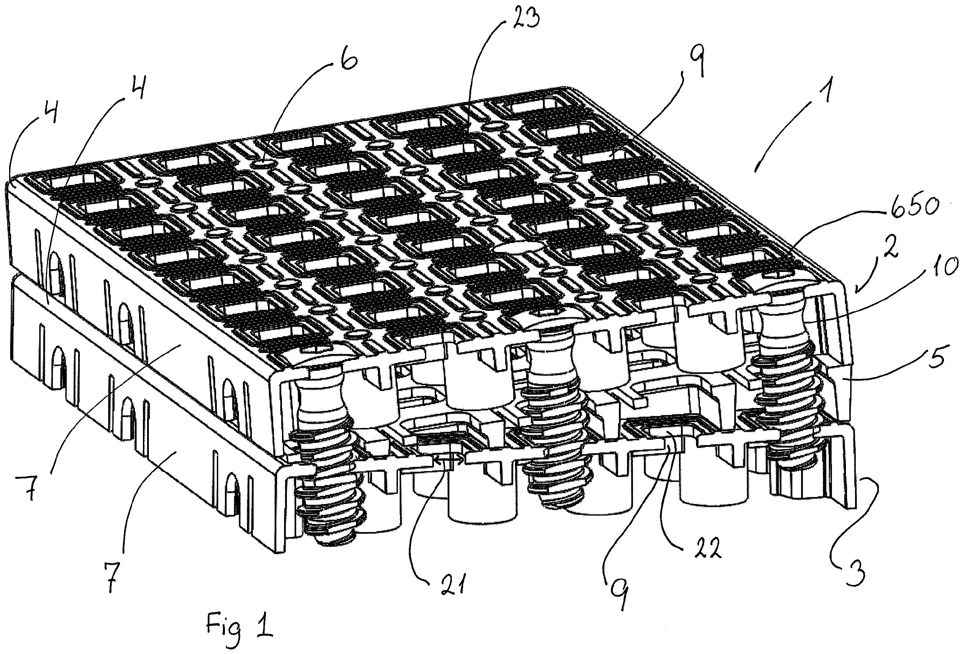

In fig. 1 is illustrated part of a ramp construction 1 assembled from two layers 2, 3 of tile elements 4. In this embodiment the tiles 4 are substantially identical, but this is not always the case. Between the two layers 2, 3 is inserted a ramp element 5, such that the finished construction will be provided with an inclined top surface 6.

The tile elements are of the type having a surface 6 around which surface 6 a flange 7 is provided. The flange may, as illustrated, be provided with apertures or slits 8 and the like, but not in all cases.

The surface is provided with apertures 9, 9' in a designated pattern. When two layers of tile elements 2, 3 are superposed as illustrated, the apertures 9, 9' will overlap, making it possible to insert one or more locking elements 10 across the surface.

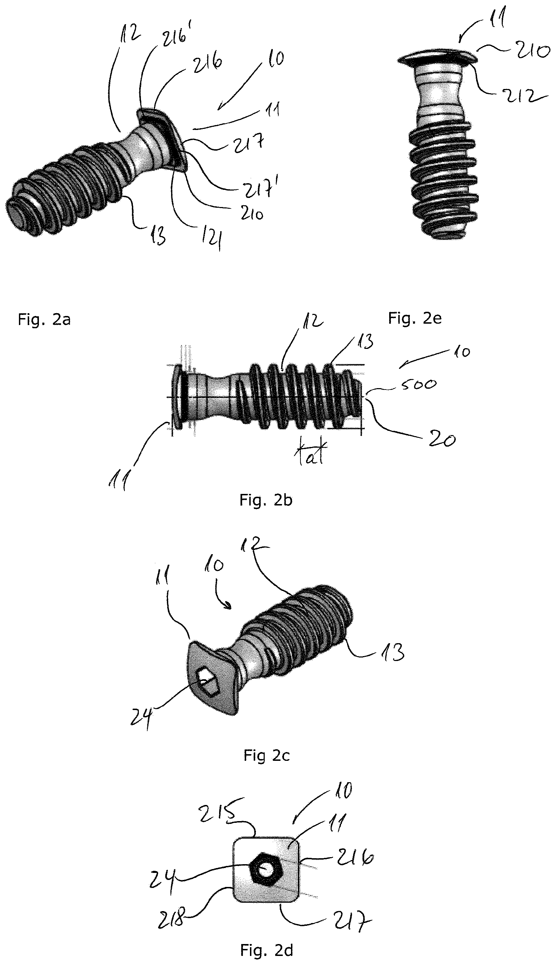

In fig. 2a-d is illustrated a locking element 10 according to the invention. The locking element 10 has a head portion 11 integral with a body portion 12. As illustrated the body portion 12 is provided on a length of said body portion with a circumferential thread 13.

The locking element 10 has a longitudinal axis 20, see fig 2b. The body portion 12 is substantially symmetric about this axis 20. Furthermore the radius perpendicular to the axis 20 of the body portion 12 is smaller than the shortest cross-distance 21 (see fig. 1) of the apertures 9. The thread 13 on the other hand extends further radially with respect to the axis 20. Therefore the body portion 12 may pass and rotate in the apertures 9, whereas the thread 13 will engage the sides 22 of the aperture 9 thereby pulling the locking element downwards corresponding to the inclination of the thread 13.

As indicated in fig. 2d which discloses the head of a locking element 10 seen from above the head portion 11 has a multi-sided geometry. Typically the locking elements will be manufactured to interact with certain types of tiles. Consequently the distance "a" between the threads (the thread's inclination - see fig. 2b) is dimensioned such that the thickness of the aperture's sides can be accommodated between the threads. Furthermore the apertures 9, 9' are provided with a rim 23, see fig. 1 surrounding the aperture on the surface of the tile. In the illustrated embodiment the rim encloses the entire circumference of the aperture, but it is clear that the rim 23 may be in sections along the aperture's perimeter. The design of the rim corresponds to the design of the head portion 11 of the locking element 10. In the illustrated example the head portion 11 is substantially in the shape of a square, and likewise the rim 23 is shaped as a square. As the locking element is inserted/screwed into the aperture 9, 9', the head portion 11 will come into contact with the surface 6 of the tile. In this position the head portion will be accommodated inside the rim 23. The rim will thereby lock and retain the head portion 11 in place - see left hand side of fig. 1, such that a substantial torque must be applied in order to loosen the locking element 10 from the rim and thereby its locking engagement with the tiles 2, 3.

The head portion 11 is furthermore provided with a hexagonal aperture 24, such that the locking element 10 may be manipulated by a suitable tool.

In order to connect superposed layers the locking elements 10 shall have a sufficient length in order to be able to engage the apertures 9' of underlying tiles and optimally the lowermost tile.

In the illustrated embodiment a ramp element 5 is inserted between the two tile layers 2, 3. The ramp element 5 is likewise provided with an aperture such that the locking element 10 can pass through the ramp element 5 and engage the underlying layer of tiles 3. The aperture in the ramp element 5 is larger such that also the thread 13 of the locking element 10 can pass the aperture without coming into engagement with the ramp element 5.

Typically tiles of this type are manufactured from a polymer material, as are the locking elements. However, with this type of threaded locking element which may be reused and reused again, they may be made from a more durable material, such as for example glass modified or otherwise strengthened polymer materials.

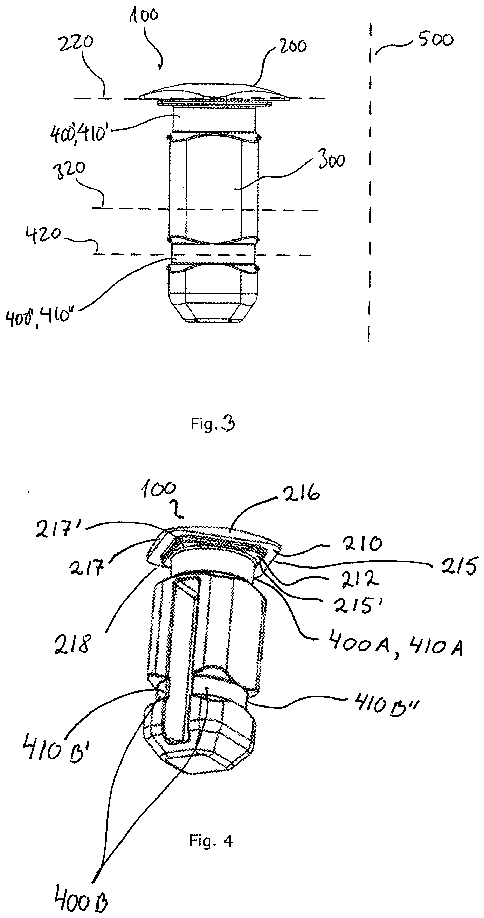

Figure 3 illustrates a view of an embodiment of the locking element 100 with a head 200 attached to a body 300 having two groups of recesses 400',400". The group of recesses nearest the head 200 comprises a single recess 410' along the periphery of the body 300. The other group of recesses 400" comprises a recess 410".

In this embodiment the recess 410" is bevelled; this will create an initial stress as the locking element 100 rotates such that the recesses 410', 410" engages with the edges of a set of overlapping apertures 640(not shown), thereby urging the tiles 610 together.

The free distal end of the body 300 is tapered as it eases the insertion of the locking member 100 into the aperture 630(not shown).

The figure further discloses the longitudinal axis 500, the first plane 220, the second plane 320 and the recess plane 420.

Figure 4 illustrates an embodiment of the locking element 100 with a head 200 attached to a body 300 having two groups of recesses 400A, 400B. The group of recesses nearest the head 200 comprises a single 410 recess along the periphery of the body 300. The other group of recesses 400B comprises two recesses 410B', 410B", each recess 410B', 410B" in the group of recesses 400B is provided on part of the periphery of the body 300.

In this embodiment the recesses 410B', 410B" are bevelled; this will create an initial stress as the locking element 100 rotates such that the locking element 100 engages with the edges of a set of overlapping apertures 640(not shown).

The free distal end of the body 300 is tapered as it eases the insertion of the locking member 100 into the aperture 630(not shown).

The head 200 has a second head cross-section 212 with a shape complimentary to an aperture 630.

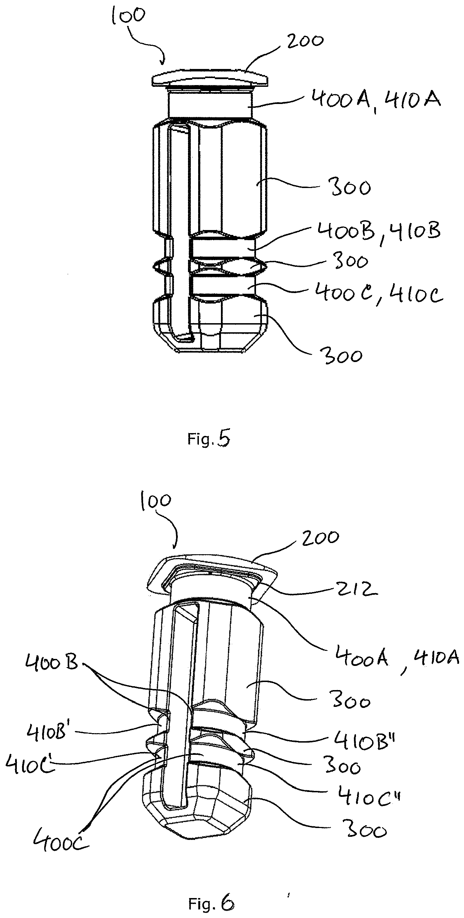

Figure 5 illustrates a further embodiment of the locking element 100 with a head 200 attached to a body 300 having three groups of recesses 400A, 400B, 400C. The group of recesses nearest the head 200 comprises a single recess 410A along the periphery of the body 300. The other two groups of recesses 400B, 400C each comprises a recess 410B, 410C.

In this embodiment the recesses 410B, 410C are bevelled; this will create an initial stress as the locking element 100 rotates, such that the locking element 100 engages with the edges of a set of overlapping apertures 640(not shown).

The free distal end of the body is tapered as it eases the insertion of the locking member 100 into the aperture 630(not shown).

Figure 6 illustrates a further embodiment of the locking element 100 with a head 200 attached to a body 300 having three groups of recesses 400A, 400B, 400C. The group of recesses 400A nearest the head 200 comprises a single recess 410A along the periphery of the body 300. The other two groups of recesses 400B, 400C each comprises two recesses 410B', 410B", 410C', 410C". Each recess 410B', 410B", 410C', 410C" in each group of recesses 400B, 400C is provided on part of the periphery of the body 300

In this embodiment the recesses 410B', 410B", 410C', 410C" are bevelled; this will create an initial stress as the locking element 100 rotates such that the locking element 100 engages with the edges of a set of overlapping apertures 640(not shown).

The free distal end of the body is tapered as it eases the insertion of the locking member 100 into the aperture 630(not shown).

The head 200 has a second head cross-section 212 with a shape complimentary to an aperture 630.

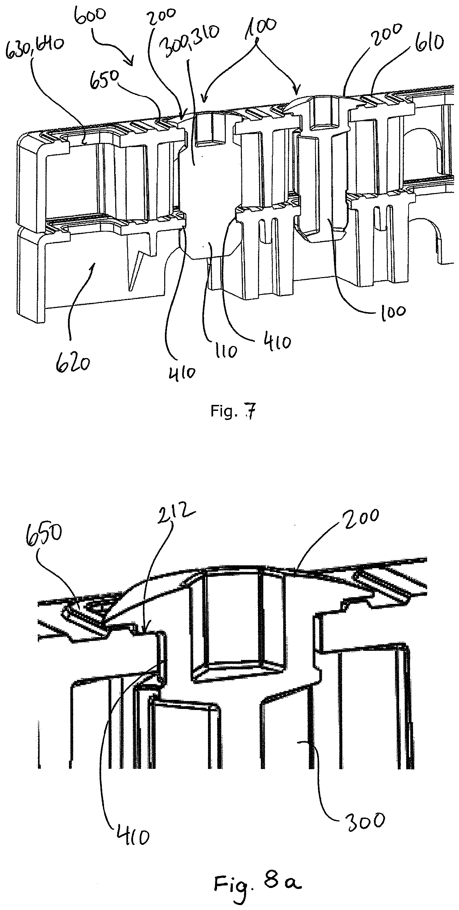

Figure 7 illustrates a view of an embodiment of the interlocking tile system 600 having overlapping tiles 620 formed by two tiles 610. The tiles 610 have several sets of overlapping apertures 640. Each aperture 630 is provided with a surrounding lip 650. Two locking elements 100 have been inserted into the interlocking tile system 600. The locking elements 100 are similar to the embodiments shown in Fig. 1 and 2.

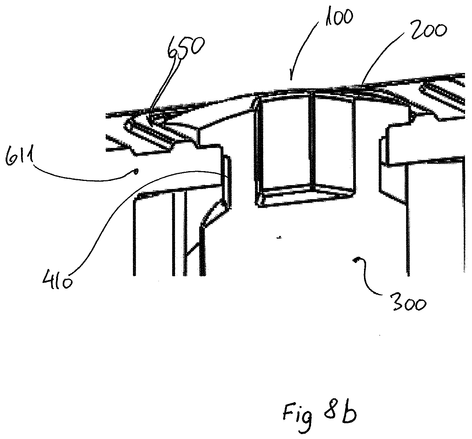

Figure 8 illustrates two close-ups of the interaction between the head 200 and an aperture 630 before (A) and after (B) the locking element has been rotary engaged with the overlapping tiles 620. The close-ups are from Fig. 5.

Furthermore, the figure illustrates how the lip 650 protects the head 200 from sideway forces.

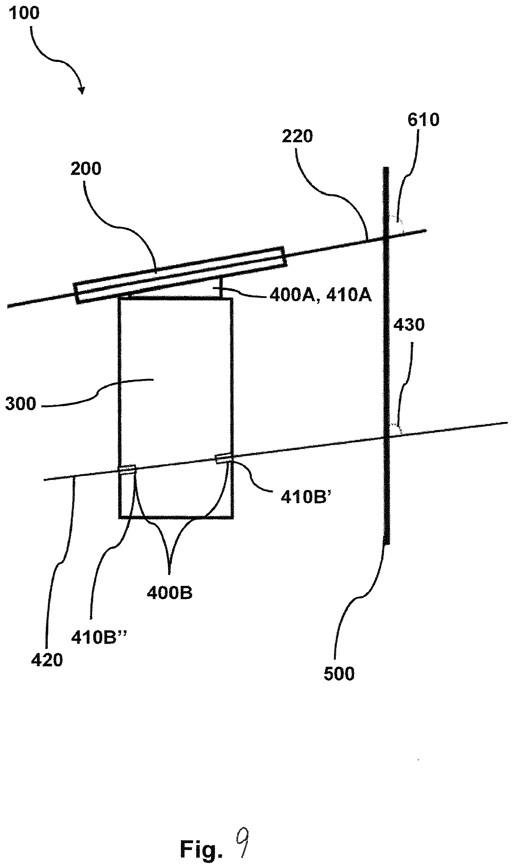

Figure 9 illustrates a further embodiment of the locking element 100.

The locking element 100 has a head 210 with a first head cross-section 210, which defines a head plane 220 which intersects the horizontal axis 500 at a head angle 230, which in this embodiment differs from 90 degrees. The locking element 100 further comprises a body 300 having two groups of recesses 400A, 400B. The group of recesses 400A nearest the head 200 comprises a single 410A recess along the periphery of the body 300. The other group of recesses 400B comprises two recesses 410B', 410B" each recess 410B', 410B" in the group of recesses 400B is provided on part of the periphery of the body 300. The recess plane 420 intersects with the horizontal plane 500 at a recess angle 430.

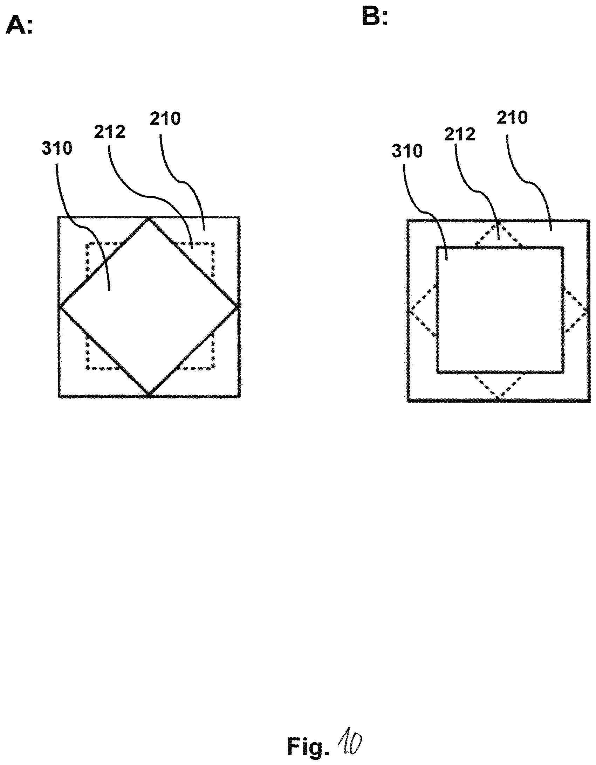

Figure 10 illustrates two embodiments (10A, 10B) of how the first and second head cross-section 210, 212 and the body cross-section 310 are placed relative to each other.

In figure 10A the body cross-section 310 is turned 45 degrees relative to the first and second head cross-section 210, 212. In other embodiments the body cross-section 310 is turned 35-55 degrees relative to the first and second head cross-section 210, 212.

In figure 10B the second head cross-section 210 is turned 45 degrees relative to the first head cross-section 210 and the body cross-section 310. In other embodiments the second head cross-section 210 is turned 35-55 degrees relative to the first head cross-section 210 and the body cross-section 310.

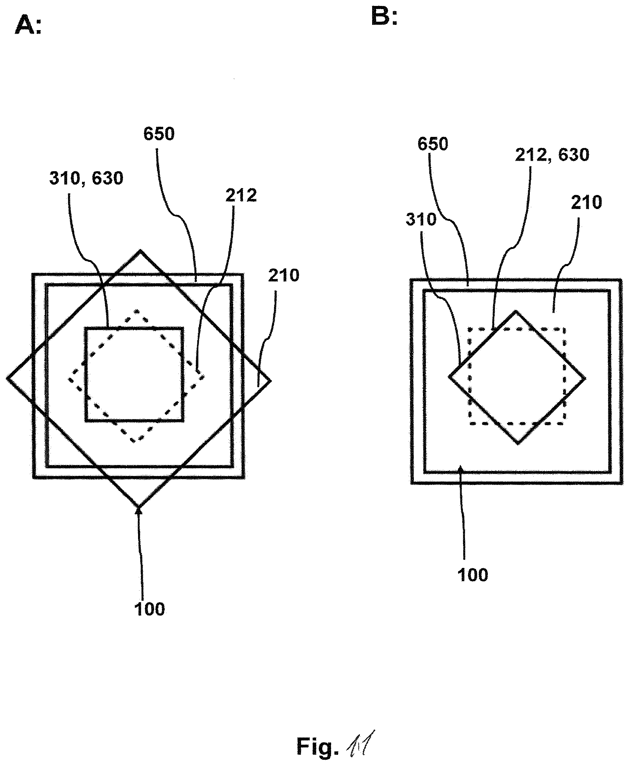

Figure 11 illustrates the working principle of the lip 650 and the first head cross-sections 210. Projections of the second head cross-section 212 and body cross-section 310 are also shown. They would however not normally be visible.

Figure 11A shows an aperture 630 having a lip 650 complimentary to the shape of the first head cross-section 210 along the edge of the aperture 630. The interlocking member 100 has been inserted into the aperture 630 and the situation is similar to the situation in Fig. 8A.

When the interlocking element 100 is rotated 45 degrees such that at least one group of recess engages with at least one edge of at least one aperture 630. Fig. 11B shows the mutual position of the locking element 100 and the aperture 630 with a surrounding lip 650 will after rotation of the locking element.
This is similar to Fig. 8B.

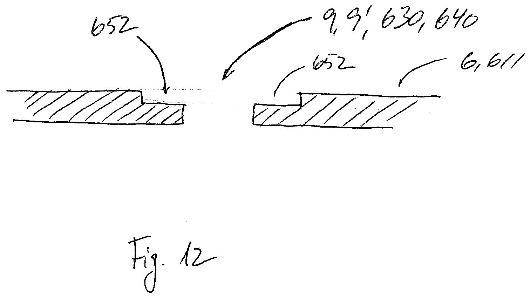

In figure 12 is illustrated a cross section through a tile particularly a cross section taken where an aperture 9, 9', 630, 640 is present. The aperture is provided with a recess 652 such that the lower part 212 of the locking elements 1,100 may be accommodated and held in the recess by the edges of the recess 652. Thereby the upper part 210 of the locking element 1,100 will be partly resting on the surface 6, 611 of the tile element. In this manner the recess 652 and particularly the size of the recess being fitted to the circumference of the lower part 212 of the head portion of a locking element provides a "locking mechanism" such that the locking element is not easily removed once it is engaged with the tile underneath and the edges of the recess 652.

## Claims

1. A locking element (10,100) and at least two overlapping tiles, where said locking element engages and connects said at least two overlapping tiles (2,3,610,620), where the tiles (2,3,610,620) are of the type having a surface (6,611) with at least one aperture (9,9',630,640), and where the tiles (2,3,610,620) are defined by a surface (6,611) having a material thickness, where said surface (6,611) along its periphery is provided with a flange (7), said flange (7) defining a tile height, which flange (7) in use is oriented downwards relative to the surface (6,611) where the at least one aperture (9,9',630,640) provided in the surface (6,611) of each tile may be superposed an aperture in an underlying tile, where there is a distance between the two surfaces substantially corresponding to the height of the flange (7) where said locking element (10,100) has a head portion (11,200) attached or integral with a body portion (12,300), where said body portion (12,300) extends along a longitudinal axis (500), and where said head portion (11,200) has an upper part (210) and a lower part (212), **characterized in that** said upper part (210) has a larger cross-section perpendicular to the longitudinal axis (500) than the lower part (212), and where both the upper part (210) and the lower part (212) is limited by three or more sides (215,215'216,216',217,217',218,218'), where said lower part (212), has a shape complimentary to said aperture (9,9',630,640).

2. A locking element and at least two overlapping tiles according to claim 1, where none of the sides (215,216,217,218) of the upper part (210) of the head (11,200) are parallel to any sides (215',216',217',218') of the heads lower part (212).

3. A locking element and at least two overlapping tiles according to claim 1 or 2 where said body portion (12) is symmetrical around the longitudinal axis (500) being an axis of symmetry (500'), said axis of symmetry (500') being coaxial with the longitudinal axis (500) of said body portion (12), and where on at least a length x parallel to the axis of symmetry (500'), the body portion (12) is provided with a circumferential thread (13).

4. Locking element and at least two overlapping tiles according to claim 3, wherein in a cross-section perpendicular to the axis of symmetry (500') the head portion (11) is larger than the body portion (12) but, smaller or equal to the outermost periphery of the thread (13).

5. Locking element and at least two overlapping tiles according to any preceding claim, wherein the head is provided with an engagement aperture (24), said aperture (24) being formed from a top surface in the head portion (11,200) a distance along the longitudinal axis (500).

6. Locking element and at least two overlapping tiles according to claim 1 wherein a section (121) of the body portion (12,300) adjacent the head portion (11,200) is bendable.

7. Locking element and at least two overlapping tiles according to claim 1, wherein said body (300) has at least one recess group (400), each recess group (400) having one or more recesses (410) in a recess plane (420) substantially perpendicular to the longitudinal axis (500).

8. Locking element (100) and at least two overlapping tiles according to claim 7 **characterised in that** the recess plane (420) and the longitudinal axis (500) intersect at a recess angle (430).

9. Locking element and at least two overlapping tiles according to any preceding claim, where the flange defines a distance between the surfaces of two adjacent layers of tiles, and when the tiles (2,3,610,620) are layered such that two apertures (9,9',630,640) in adjacent layers overlap, said locking element (1,100) being inserted through the overlapping apertures (9,9',630,640), and by twisting the locking element (1,100) the thread (13) or recess group (400) on the locking element (1,100) will engage the side of at least one of the overlapping apertures (9,9',630,640) thereby locking said tiles (2,3,610,620) relative to each other.

10. Locking element and at least two overlapping tiles according to any preceding claim, wherein on the surface (6,611) of the tile a ridge (650) is provided surrounding the at least one aperture (9,9',630,640), said ridge's geometric shape corresponding to the cross-section of the locking element's upper head part (210) such that the upper head part (210) fits snugly inside the perimeter of the ridge (650).

11. Locking element and at least two overlapping tiles according to any preceding claim, where a recess (652) is formed in the surface (6,611) surrounding the at least one aperture (9,9',630,640), said recess (650) having a shape corresponding to the cross-section of the upper head part (210) of the locking element (10,100) such that the upper head part (210) fits snugly inside the perimeter of the recess (652).

12. Method of assembling and disassembling at least two overlapping tiles and a locking element according to one of the preceding claims the tiles of the type having a surface (6,611) and a material thickness, where said surface (6,611) along its periphery is provided with a flange (7) which flange in use is oriented downwards relative to the surface (6,611) , said flange (7) defining a tile height, and where the surface (6,611) is provided with at least one aperture (9,9',630,640), such that when two or more tiles are on top of each other the apertures (9,9',630,640) in different layers of tiles are superposed, where after the locking element (10,100) for engaging and connecting the at least two overlapping tiles (2,3,610,620), where there is a distance between the two surfaces substantially corresponding to the height of the flange (7) where said locking element (10,100) has a head portion (11,200) attached or integral with a body portion (12,300), where said body portion (12,300) extends along a longitudinal axis (500), and where said head portion (11,200) has an upper part (210) and a lower part (212), where said upper part (210) has a larger cross-section perpendicular to the longitudinal axis (500) than the lower part (212), and where both the upper part (210) and the lower part (212) is limited by three or more sides (215,215'216,216',217,217',218,218') is selected, where either said body portion (12) is symmetrical around the longitudinal axis (500) being an axis of symmetry (500'), said axis of symmetry (500') being coaxial with the longitudinal axis (500) of said body portion (12), and where on at least a length parallel to the axis of symmetry (500'), the body portion (12) is provided with a circumferential thread (13) or where said body (300) has at least one recess group (400), each recess group (400) having one or more recesses (410) in a recess plane (420) substantially perpendicular to the longitudinal axis (500), such that the body length of the locking element (10,100) is long enough to be inserted through all desired overlapping apertures (9,9',630,640) in a desired number of layers, and by turning the locking element (10,100), the thread (13) or recess group (400) of the locking element (10,100) engages at least one underlying tile's aperture (9,9',630,640), thereby urging the underlying tile towards the uppermost tile.

## Patentansprüche

1. Verriegelungselement (10,100) und mindestens zwei überlappende Platten, wobei das Verriegelungselement die mindestens zwei überlappenden Platten (2,3,610,620) in Eingriff nimmt und verbindet, wobei die Platten (2,3,610,620) von dem Typ sind, der eine Oberfläche (6,611) mit mindestens einer Öffnung (9,9',630,640) aufweist, und wobei die Platten (2,3,610,620) durch eine Oberfläche (6,611) definiert sind, die eine Materialdicke aufweist, wobei die Oberfläche (6,611) entlang ihres Außenumfangs mit einem Flansch (7) bereitgestellt ist, wobei der Flansch (7) eine Plattenhöhe definiert, wobei der Flansch (7) in Gebrauch in Bezug auf die Oberfläche (6,611) abwärts ausgerichtet ist, wobei die in der Oberfläche (6,611) jeder Platte bereitgestellte mindestens eine Öffnung (9,9',630,640) durch eine Öffnung in einer darunterliegenden Platte überlagert sein kann, wo es einen Abstand zwischen den zwei Oberflächen gibt, der im Wesentlichen der Höhe des Flansches (7) entspricht, wobei das Verriegelungselement (10,100) einen Kopfabschnitt (11,200) aufweist, der befestigt oder mit einem Körperabschnitt (12,300) einstückig ausgebildet ist, wobei sich der Körperabschnitt (12,300) entlang einer Längsachse (500) erstreckt, und wobei der Kopfabschnitt (11,200) einen oberen Teil (210) und einen unteren Teil (212) aufweist, **dadurch gekennzeichnet, dass** der obere Teil (210) einen größeren Querschnitt senkrecht zur Längsachse (500) als der untere Teil (212) aufweist, und wobei sowohl der obere Teil (210) als auch der untere Teil (212) durch drei oder mehrere Seiten (215,215'216,216',217,217',218,218') begrenzt sind, wobei der untere Teil (212) eine Form komplementär zu der Öffnung (9,9',630,640) aufweist.

2. Verriegelungselement und mindestens zwei überlappende Platten nach Anspruch 1, wobei keine der Seiten (215,216,217,218) des oberen Teils (210) des Kopfes (11,200) parallel zu beliebigen Seiten (215',216',217',218') des unteren Teils (212) des Kopfes verläuft.

3. Verriegelungselement und mindestens zwei überlappende Platten nach Anspruch 1 oder 2, wobei der Körperabschnitt (12) symmetrisch um die Längsachse (500) liegt, die eine Symmetrieachse (500') ist, wobei die Symmetrieachse (500') koaxial mit der Längsachse (500) des Körperabschnitts (12) angeordnet ist, und wobei der Körperabschnitt (12) an mindestens einer Länge x parallel zur Symmetrieachse (500') mit einem Umfangsgewinde (13) bereitgestellt ist.

4. Verriegelungselement und mindestens zwei überlappende Platten nach Anspruch 3, wobei der Kopfabschnitt (11) in einem Querschnitt senkrecht zur Symmetrieachse (500') größer als der Körperabschnitt (12), aber kleiner oder gleich dem äußersten Umfang des Gewindes (13) ist.

5. Verriegelungselement und mindestens zwei überlappende Platten nach einem der vorhergehenden Ansprüche, wobei der Kopf mit einer Eingriffsöffnung (24) bereitgestellt ist, wobei die Öffnung (24) von einer oberen Oberfläche in dem Kopfabschnitt (11,200) in einem Abstand entlang der Längsachse (500) ausgebildet ist.

6. Verriegelungselement und mindestens zwei überlappende Platten nach Anspruch 1, wobei ein Bereich (121) des Körperabschnitts (12,300) angrenzend an den Kopfabschnitt (11,200) biegsam ist.

7. Verriegelungselement und mindestens zwei überlappende Platten nach Anspruch 1, wobei der Körper (300) mindestens eine Aussparungsgruppe (400) aufweist, wobei jede Aussparungsgruppe (400) eine oder mehrere Aussparungen (410) in einer Aussparungsebene (420) im Wesentlichen senkrecht zur Längsachse (500) aufweist.

8. Verriegelungselement (100) und mindestens zwei überlappende Platten nach Anspruch 7, **dadurch gekennzeichnet, dass** sich die Aussparungsebene (420) und die Längsachse (500) in einem Aussparungswinkel (430) überschneiden.

9. Verriegelungselement und mindestens zwei überlappende Platten nach einem der vorhergehenden Ansprüche, wobei der Flansch einen Abstand zwischen den Oberflächen von zwei angrenzenden Plattenschichten definiert und das Verriegelungselement (1,100), wenn die Platten (2,3,610,620) derart geschichtet sind, dass sich zwei Öffnungen (9,9',630,640) in angrenzenden Schichten überlappen, durch die überlappenden Öffnungen (9,9',630,640) eingegeben wird, und wobei das Gewinde (13) oder die Aussparungsgruppe (400) an dem Verriegelungselement (1,100) durch Drehen des Verriegelungselements (1,100) die Seite von mindestens einer der überlappenden Öffnungen (9,9',630,640) in Eingriff nimmt, wodurch die Platten (2,3,610,620) relativ zueinander verriegelt werden.

10. Verriegelungselement und mindestens zwei überlappende Platten nach einem der vorhergehenden Ansprüche, wobei ein Wulst (650) an der Oberfläche (6,611) der Platte bereitgestellt ist, der die mindestens eine Öffnung (9,9',630,640) umgibt, wobei die geometrische Form des Wulsts dem Querschnitt des oberen Kopfteils (210) des Verriegelungselements derart entspricht, dass der obere Kopfteil (210) genau in den Umfang des Wulsts (650) passt.

11. Verriegelungselement und mindestens zwei überlappende Platten nach einem der vorhergehenden Ansprüche, wobei eine Aussparung (652) in der Oberfläche (6,611) ausgebildet ist, die die mindestens eine Öffnung (9,9',630,640) umgibt, wobei die Aussparung (650) eine Form aufweist, die dem Querschnitt des oberen Kopfteils (210) des Verriegelungselements (10,100) derart entspricht, dass der obere Kopfteil (210) genau in den Umfang der Aussparung (652) passt.

12. Verfahren zur Montage und Demontage von mindestens zwei überlappenden Platten und einem Verriegelungselement nach einem der vorhergehenden Ansprüche, wobei die Platten des Typs eine Oberfläche (6,611) und eine Materialdicke ausweisen, wobei die Oberfläche (6,611) entlang ihres Außenumfangs mit einem Flansch (7) bereitgestellt ist, wobei der Flansch in Gebrauch in Bezug auf die Oberfläche (6,611) abwärts ausgerichtet ist, wobei der Flansch (7) eine Plattenhöhe definiert, und wobei die Oberfläche (6,611) mit mindestens einer Öffnung (9,9',630,640) derart bereitgestellt ist, dass die Öffnungen (9,9',630,640) in unterschiedlichen Schichten der Platten überlagert sind, wenn zwei oder mehrere Platten übereinander liegen, wonach das Verriegelungselement (10,100) zur Ineingriffnahme und Verbindung der mindestens zwei überlappenden Platten (2,3,610,620), wo es einen Abstand zwischen den zwei Oberflächen gibt, der im Wesentlichen der Höhe des Flansches (7) entspricht, wobei das Verriegelungselement (10,100) einen Kopfabschnitt (11,200) aufweist, der befestigt oder mit einem Körperabschnitt (12,300) einstückig ausgebildet ist, wobei sich der Körperabschnitt (12,300) entlang einer Längsachse (500) erstreckt, und wobei der Kopfabschnitt (11,200) einen oberen Teil (210) und einen unteren Teil (212) aufweist, wobei der obere Teil (210) einen größeren Querschnitt senkrecht zur Längsachse (500) als der untere Teil (212) aufweist, und wobei sowohl der obere Teil (210) als auch der untere Teil (212) durch drei oder mehrere Seiten (215,215'216,216',217,217',218,218') begrenzt sind ausgewählt sind, wobei entweder der Körperabschnitt (12) symmetrisch um die Längsachse (500) liegt, die eine Symmetrieachse (500') ist, wobei die Symmetrieachse (500') koaxial mit der Längsachse (500) des Körperabschnitts (12) angeordnet ist, und wobei der Körperabschnitt (12) an mindestens einer Länge parallel zur Symmetrieachse (500') mit einem Umfangsgewinde (13) bereitgestellt ist, oder wobei der Körper (300) mindestens eine Aussparungsgruppe (400) aufweist, wobei jede Aussparungsgruppe (400) eine oder mehrere Aussparungen (410) in einer Aussparungsebene (420) im Wesentlichen senkrecht zur Längsachse (500) aufweist, sodass die Körperlänge des Verriegelungselements (10,100) lang genug ist, um durch alle gewünschten überlappenden Öffnungen (9,9',630,640) in einer gewünschten Anzahl von Schichten eingegeben zu werden, und wobei das Gewinde (13) oder die Aussparungsgruppe (400) des Verriegelungselements (10,100) durch Drehen des Verriegelungselements (10,100) die Öffnung (9,9',630,640) mindestens einer darunterliegenden Platte in Eingriff nimmt, wodurch die darunterliegende Platte in Richtung der obersten Platte gedrängt wird.

## Revendications

1. Élément de verrouillage (10, 100) et au moins deux dalles se chevauchant, où ledit élément de verrouillage vient en prise avec lesdites au moins deux dalles se chevauchant (2, 3, 610, 620) et relie celles-ci, où les dalles (2, 3, 610, 620) sont du type ayant une surface (6, 611) avec au moins une ouverture (9, 9', 630, 640), et où les dalles (2, 3, 610, 620) sont définies par une surface (6, 611) ayant une certaine épaisseur de matière, où ladite surface (6, 611) le long de sa périphérie est munie d'un rebord (7), ledit rebord (7) définissant une hauteur de dalle, lequel rebord (7), en utilisation, est orienté vers le bas par rapport à la surface (6, 611) où l'au moins une ouverture (9, 9', 630, 640) ménagée dans la surface (6, 611) de chaque dalle peut être superposée à une ouverture dans une dalle sous-jacente, où il y a une distance entre les deux surfaces correspondant sensiblement à la hauteur du rebord (7) où ledit élément de verrouillage (10, 100) possède une partie de tête (11, 200) fixée à une partie de corps (12, 300) ou solidaire de celle-ci, où ladite partie de corps (12, 300) s'étend le long d'un axe longitudinal (500), et où ladite partie de tête (11, 200) possède une partie supérieure (210) et une partie inférieure (212), **caractérisé en ce que**
ladite partie supérieure (210) possède une plus grande section transversale perpendiculaire à l'axe longitudinal (500) que la partie inférieure (212), et
où à la fois la partie supérieure (210) et la partie inférieure (212) est limitée par trois côtés ou plus (215, 215', 216, 216', 217, 217', 218, 218'), où ladite partie inférieure (212) possède une forme complémentaire à ladite ouverture (9, 9', 630, 640).

2. Élément de verrouillage et au moins deux dalles se chevauchant selon la revendication 1, où aucun des côtés (215, 216, 217, 218) de la partie supérieure (210) de la tête (11, 200) ne sont parallèles à des quelconques côtés (215', 216', 217', 218') de la partie inférieure des têtes (212).

3. Élément de verrouillage et au moins deux dalles se chevauchant selon la revendication 1 ou 2 où ladite partie de corps (12) est symétrique autour de l'axe longitudinal (500) qui est un axe de symétrie (500'), ledit axe de symétrie (500') étant coaxial à l'axe longitudinal (500) de ladite partie de corps (12), et où sur au moins une longueur x parallèle à l'axe de symétrie (500'), la partie de corps (12) est munie d'un filetage circonférentiel (13).

4. Élément de verrouillage et au moins deux dalles se chevauchant selon la revendication 3, dans lequel, dans une section transversale perpendiculaire à l'axe de symétrie (500'), la partie de tête (11) est plus grande que la partie de corps (12) mais plus petite que la périphérie la plus externe du filetage (13) ou égale à celle-ci.

5. Élément de verrouillage et au moins deux dalles se chevauchant selon une quelconque revendication précédente, dans lequel la tête est munie d'une ouverture de mise en prise (24), ladite ouverture (24) étant formée à partir d'une surface supérieure dans la partie de tête (11, 200) sur une distance le long de l'axe longitudinal (500).

6. Élément de verrouillage et au moins deux dalles se chevauchant selon la revendication 1 dans lequel une section (121) de la partie de corps (12, 300) adjacente à la partie de tête (11, 200) est pliable.

7. Élément de verrouillage et au moins deux dalles se chevauchant selon la revendication 1, dans lequel ledit corps (300) possède au moins un groupe d'évidement (400), chaque groupe d'évidement (400) ayant un ou plusieurs évidements (410) dans un plan d'évidement (420) sensiblement perpendiculaire à l'axe longitudinal (500).

8. Élément de verrouillage (100) et au moins deux dalles se chevauchant selon la revendication 7 **caractérisé en ce que** le plan d'évidement (420) et l'axe longitudinal (500) se croisent selon un angle d'évidement (430).

9. Élément de verrouillage et au moins deux dalles se chevauchant selon une quelconque revendication précédente, où le rebord définit une distance entre les surfaces de deux couches adjacentes de dalles, et lorsque les dalles (2, 3, 610, 620) sont stratifiées de sorte que deux ouvertures (9, 9', 630, 640) dans des couches adjacentes se chevauchent, ledit élément de verrouillage (1, 100) étant inséré à travers les ouvertures se chevauchant (9, 9', 630, 640), et par une torsion de l'élément de verrouillage (1, 100), le filetage (13) ou le groupe d'évidement (400) sur l'élément de verrouillage (1, 100) viendra en prise avec le côté d'au moins l'une des ouvertures se chevauchant (9, 9', 630, 640) en verrouillant ainsi lesdites dalles (2, 3, 610, 620) les unes par rapport aux autres.

10. Élément de verrouillage et au moins deux dalles se chevauchant selon une quelconque revendication précédente, dans lequel, sur la surface (6, 611) de la dalle, une nervure (650) est ménagée en encerclant l'au moins une ouverture (9, 9', 630, 640), la forme géométrique de ladite nervure correspondant à la section transversale de la partie de tête supérieure (210) de l'élément de verrouillage de sorte que la partie de tête supérieure (210) s'ajuste parfaitement à l'intérieur du périmètre de la nervure (650).

11. Élément de verrouillage et au moins deux dalles se chevauchant selon une quelconque revendication précédente, où un évidement (652) est formé dans la surface (6, 611) encerclant l'au moins une ouverture (9, 9', 630, 640), ledit évidement (650) ayant une forme correspondant à la section transversale de la partie de tête supérieure (210) de l'élément de verrouillage (10, 100) de sorte que la partie de tête supérieure (210) s'ajuste parfaitement à l'intérieur du périmètre de l'évidement (652) .

12. Procédé de montage et de démontage d'au moins deux dalles se chevauchant et d'un élément de verrouillage selon l'une des revendications précédentes les dalles étant du type ayant une surface (6,611) et une certaine épaisseur de matière, où ladite surface (6, 611) le long de sa périphérie est munie d'un rebord (7), lequel rebord, en utilisation, est orienté vers le bas par rapport à la surface (6, 611), ledit rebord (7) définissant une hauteur de dalle, et où la surface (6, 611) est munie d'au moins une ouverture (9, 9', 630, 640), de sorte que lorsque deux dalles ou plus sont l'une sur l'autre, les ouvertures (9, 9', 630, 640) dans différentes couches de dalles sont superposées, où après que l'élément de verrouillage (10, 100) pour mettre en prise avec les au moins deux dalles se chevauchant (2, 3, 610, 620) et relier celles-ci, où il y a une distance entre les deux surfaces correspondant sensiblement à la hauteur du rebord (7) où ledit élément de verrouillage (10, 100) possède une partie de tête (11, 200) fixée à une partie de corps (12, 300) ou solidaire de celle-ci, où ladite partie de corps (12, 300) s'étend le long d'un axe longitudinal (500), et où ladite partie de tête (11, 200) possède une partie supérieure (210) et une partie inférieure (212), où ladite partie supérieure (210) possède une plus grande section transversale perpendiculaire à l'axe longitudinal (500) que la partie inférieure (212), et où à la fois la partie supérieure (210) et la partie inférieure (212) est limitée par trois côtés ou plus (215, 215', 216, 216', 217, 217', 218, 218'), est sélectionné, où soit ladite partie de corps (12) est symétrique autour de l'axe longitudinal (500) qui est un axe de symétrie (500'), ledit axe de symétrie (500') étant coaxial à l'axe longitudinal (500) de ladite partie de corps (12), et où sur au moins une longueur parallèle à l'axe de symétrie (500'), la partie de corps (12) est munie d'un filetage circonférentiel (13), soit où ledit corps (300) possède au moins un groupe d'évidement (400), chaque groupe d'évidement (400) ayant un ou plusieurs évidements (410) dans un plan d'évidement (420) sensiblement perpendiculaire à l'axe longitudinal (500), de sorte que la longueur de corps de l'élément de verrouillage (10, 100) soit suffisamment longue pour qu'il soit inséré à travers toutes les ouvertures se chevauchant (9, 9', 630, 640) souhaitées dans un nombre souhaité de couches, et par une rotation de l'élément de verrouillage (10, 100), le filetage (13) ou le groupe d'évidement (400) de l'élément de verrouillage (10, 100) vient en prise avec au moins une ouverture de la dalle sous-jacente (9, 9', 630, 640), ce qui sollicite la dalle sous-jacente vers la dalle la plus supérieure.
